# EUROPEAN PATENT APPLICATION

(11) **EP 1 154 167 A1**
(43) Date of publication of application: **14.11.2001**
(21) Application number: 00109854.0
(22) Date of filing: 10.05.2000
(51) Int. Cl.: F16B 12/40, F16B 7/04, A47B 13/02, F16B 7/18

(54) **Joint device for a knot of a lattice structure of a piece of furniture, particularly for tables, desks, or the like**

(71) Applicant: Desital Holland B.V., 1103 RA Amsterdam Z.O. (NL)
(72) Inventor: Piretti, Giancarlo, 40137 Bologna (IT)
(74) Representative: Notaro, Giancarlo

(57) **Abstract**

A joint device for knot (4) of a lattice structure (1) of a piece of furniture, particularly for tables, desks or the like, comprises a main beam (2) connected to one or more auxiliary beams (3) arranged along radial directions in a plane perpendicular to the main beam (2). Each auxiliary beam (3) is constituted by a tubular element with at least one opened end in which a joint element (7) is received. The joint element (7) has a head (8) projecting from the auxiliary beam (3) provided with means (11,12) for connection to the main beam (2). This joint element (3) further has two arms (10) in form of parallel and spaced apart planar plates which are inserted within the auxiliary beam (3) and are moved away from each other by screws (14) so as to firmly secure the joint element (7) to the auxiliary beam (3).

## Description

The present invention relates to a joint device for a knot of a lattice structure of a piece of furniture, particularly for tables, desks or the like, of the type comprising at least one main beam and a plurality of auxiliary beams having ends connected to the main beam and arranged along radial directions in a plane perpendicular to the main beam.

The object of the present invention is that of providing a joint device of the above indicated type having a simple and inexpensive structure, which can be assembled and disassembled easily and rapidly and which ensures a stable connection.

In view of achieving this object, the invention provides a device of the above indicated type, characterized in that each auxiliary beam is in form of a tubular element having at least one opened end in which a joint element is inserted provided with means for disengageable connection to the main beam, in that said joint element has a head projecting from said opened end of the auxiliary beam and a pair of parallel and spaced apart arms projecting from the head inside the auxiliary beam, and in that one of said arms has at least threaded hole for engagement of a screw adapted to apply a force against the other arm in order to move said arms away from each other securing thereby the joint element within the auxiliary beam, said auxiliary beam having a wall with at least one hole for insertion of said screw.

In a preferred embodiment, the auxiliary beam is in form of a flattened tubular element, with two opposite planar parallel and spaced apart walls, and the two arms of the joint element are in form of substantially planar place, which are parallel too and spaced apart from each other.

Also in the case of said preferred embodiment, the plate constituting one of the two arms of the joint element is provided with a number of threaded holes for engagements of the respective screws for moving the arms away from each other, said screws being aligned along the longitudinal direction of the auxiliary beam.

According to a further preferred feature, the head of the joint element has at least two holes having axes parallel to the longitudinal direction of the auxiliary beam, for engagement of screws for fixing the joint element to the main beam. The main beam is provided with receptacle means in which nuts are inserted for engagement of said fixing screws.

According to a further preferred feature, the main beam is constituted by a tubular element having at least one opened hand within which a body is inserted having circumferencial wall with receptacles for supporting the nuts for the fixing screws, the wall of the main beam having holes for passage of the fixing screws at the locations of said receptacles.

Preferably, the main beam has a circular cross-section and the above mentioned body having the nut receiving receptacles is a cylindrical element of plastic material provided with at least two nut receiving receptacles which are aligned with the longitudinal direction of the main beam at one or more angular locations of the cylindrical body. In this embodiment, the head of the joint element has a concave front surface in contact with the outer surface of tubular element of circular cross-section constituting the main beam.

Due to the above described features, the joint device according to the invention can be assembled and disassembled in an extremely easy and rapid manner, it has a structure which is relatively inexpensive to manufacture and ensures the perfect stability of the connection when it is mounted.

Further features and advantages of the invention will become apparent from the description which follows with reference to the annexed drawings, given purely by way of non limiting example, in which:
- Figure 1 is a diagrammatic perspective view of a lattice structure of a piece of furniture in form of table or desk, incorporating a plurality of joint devices according to the invention,
- Figure 2 is a side view at an enlarged scale of a detail of figure 1,
- Figure 3 is a perspective exploded view of the detail of figure 2,
- Figure 4 is a side exploded view of the detail of figure 2,
- Figure 5 is a cross-sectional view taken along line V-V of figure 4,
- Figure 6 is a cross-sectional view according to line VI-VI of figure 2, and
- Figure 7 is a view along arrow VII of figure 3.

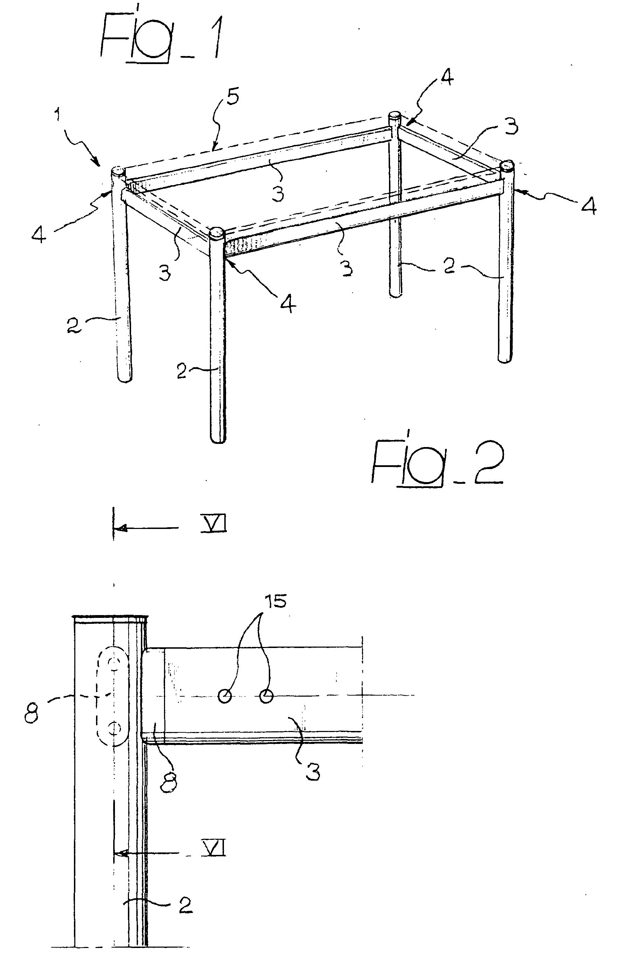

In figure 1, reference numeral 1 generally designates a lattice support structure of a table, desk or the like comprising four legs 2 which are connected on top by four horizontal beams 3 at four knots 4 of the lattice structure. The bord of the table 5 (shown by dotted lines in figure 1) is to be connected to the upper ends of the legs 2 in any known way. The construction details relating to the connection between the bord 5 and the leg 2 are not shown, since, as already indicated, they can be made in any known way and they do not fall, taken along, within the scope of the present invention, which instead is related to the device for connecting the legs 2 and the horizontal beams 3 at each knot 4 of the lattice structure 1.

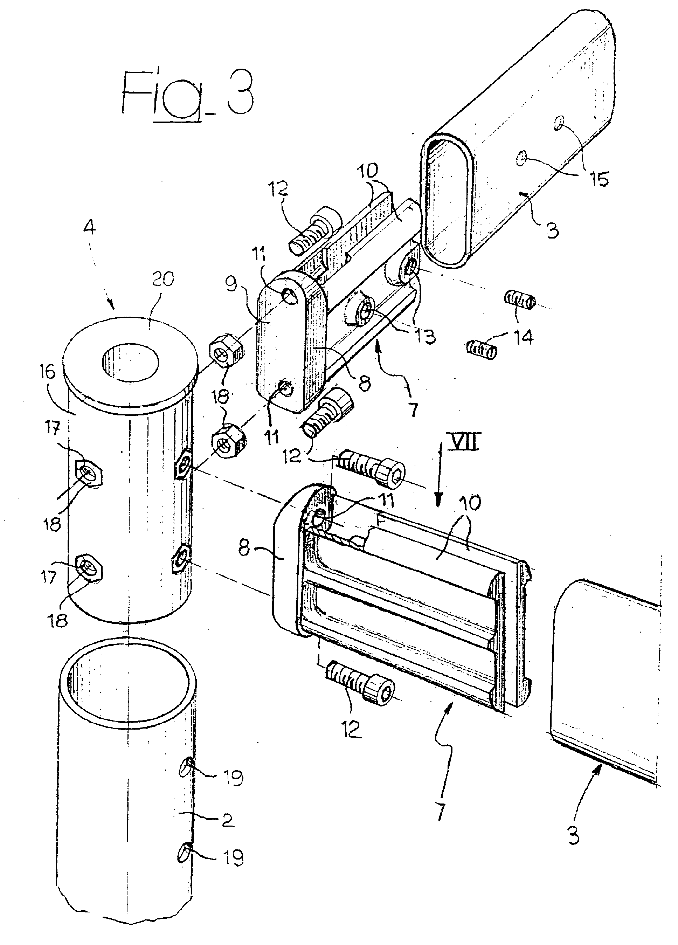

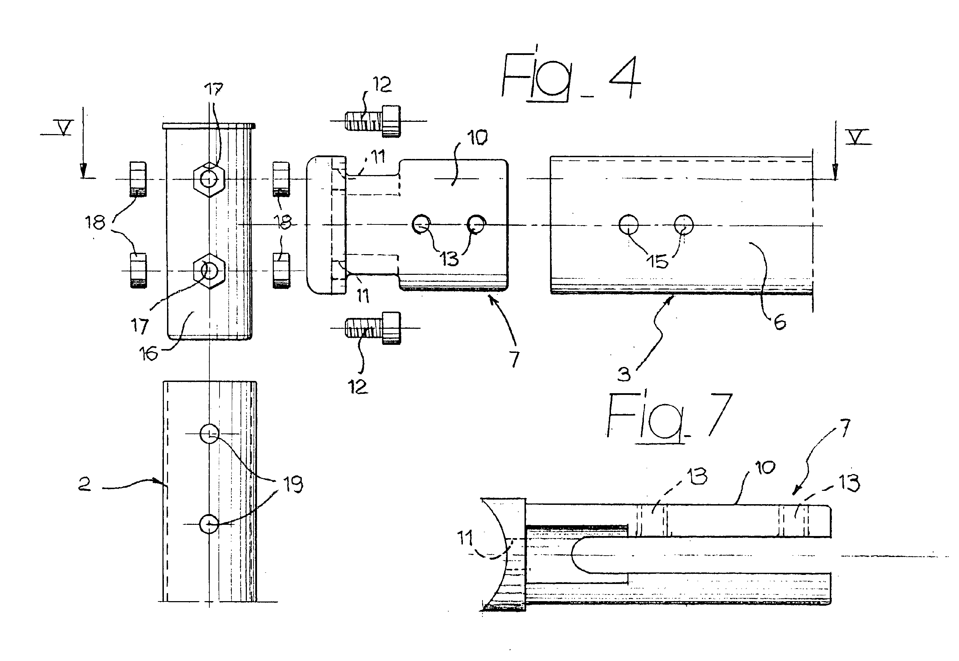

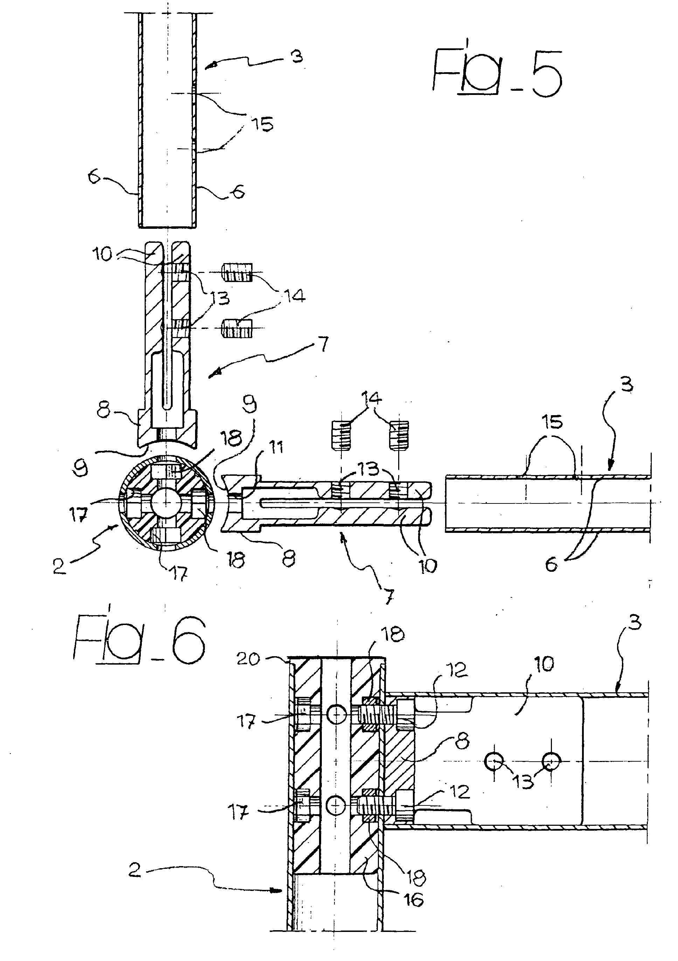

In general, the invention relates to the case of a joint device for a knot 4 of a lattice structure comprising a main beam (in the illustrated example anyone of the legs 2) and one or more auxiliary beams (in the illustrated example the two horizontal beams 3 which intersect at each knot 4) having the ends connected to the main beam 2 and arranged along radial direction in a plane perpendicular to the main beam 2. For this reason, figures 2-6 only show the construction details of a specific knot 4. With reference to these figures, each auxiliary beam 3 is constituted by a flattened tubular metal element having two opposite planar walls 6 which are parallel to a space apart from each other, and opened at each end. Within each end of each auxiliary beam 3 there is inserted a joint element 7, constituted for example by a body of cast metal, which comprises a head 8 projecting at the end of the auxiliary beam 3 and having a front concave surface 9 which comes in contact with the wall of the main beam 2, which is constituted by a tubular metal element of circular cross-section, as well as a pair of arms 10 projecting in a cantilever fashion by the head 8 inside the auxiliary beam 3 and made in form of parallel and spaced apart planar plates. The head 8 has a pair of holes 11 having axes parallel to the longitudinal direction of the auxiliary beam 3, for passage of screws 12 for fixing the joint element 7 to the main beam 2, in a way which will be described in detail hereinafter.

Furthermore, one of the two plates 10 has a pair of threaded holes 13 aligned along the longitudinal direction of the auxiliary beam 3, for engagement of two threaded grains 14 which are inserted through holes 15 of one of the walls of the auxiliary beam 3 and screwed within holes 13 so as to come in contact at their front ends with the plate 10 which is not provided with the holes 13, in order to cause the plate 10 to move away from each other, securing thereby the joint element 7 within the auxiliary beam 3.

As already indicated in the foregoing, the head 8 of each joint element is provided holes 11 for engagement of screws 12 for fixing the joint element 7 to the main beam 2. As also indicated, each main beam 2 is in form of a tubular metal element with a circular cross-section opened at least at one end. At this opened end a solid cylindrical body of plastic material 16 is inserted having a circumferencial wall with a pair of receptacles 17 for receiving hexagonal nuts 18, which are aligned along the longitudinal direction of the main beam 2, at four angular locations spaced by 90° from each other. The nuts 18 are for engagement of the fixing screws 12. The wall of the main beam 2 has holes 19 for passage of screws 12 at at least two angular locations which are spaced by 90° from each other. Naturally, it is generally possible to provide a lattice structure for a piece of furniture which has a main beam 2 connected to more than two auxiliary beams. In this case, obviously, the holes 19 are provided at each angular location where an auxiliary beam is assembled. The body 16 of plastic material has a flattened top head which abuts against the upper end surface of the main beam in the mounted condition. From the foregoing description it is clearly apparent that the joint device according to the invention renders the structure assembling and disassembling operations extremely easy and rapid. At the same time, the joint device according to the invention has a relatively simple and inexpensive structure, which however ensures the perfect stability of the connection.

Naturally, while the principle of the invention remains the same, the details of construction and the embodiments may widely vary with respect to what has been described and illustrated purely by way of example, without departing from the scope of the present invention.

For example, each horizontal beam 3 could have a circular cross-section, with the two arms 10 being accordingly shaped. Furthermore, in lieu of the element 16 bearing the nuts 18, screw receiving threaded holes could be formed directly in the wall of the leg 2.

## Claims

1. Joint device for knot (4) of a lattice structure (1) of a piece of furniture, particularly for tables, desks or the like, of the type comprising at least one main beam (2) and one or more auxiliary beam (3) having the ends connected to the main beam (2) and arranged along radial directions in a plane perpendicular to the main beam (2),
**characterized in that** each auxiliary beam (3) is in form of tubular element having one opened hand in which a joint element (7) is inserted provided with means (11, 12) for disengageable connection to the main beam (2), **in that** said joint element (7) has a head (8) projecting from the opened hand of the auxiliary beam (3) and a pair of parallel and spaced apart arms (10) projecting from the head (8) inside the auxiliary beam (3), and **in that** one of said arms (10) has at least one threaded hole (13) for engagement of a screw (14) adapted to apply a force against the other arm (10) to move said arms (10) away from each other, securing thereby the joint element (7) inside the auxiliary beam (3), said auxiliary beam (3) having a wall with at least a hole (15) for passage of said screw (14).

2. Joint device according to claim 1, **characterized in that** the auxiliary beam (3) is in form of flattened tabular element, with two planar parallel and spaced apart opposite walls (6), **in that** the two arms (10) of the joint element (7) are in form of substantially planar plates which are parallel too and spaced apart from each other.

3. Joint device according to claim 2, **characterized in that** the plate constituting one of the two arms (10) of the joint element (7) is provided with a number of threaded holes (13) for engagement of respective screws (14) for causing the arms (10) to move away form each other, said holes (13) being aligned along the longitudinal direction of the auxiliary beam.

4. Joint device according to claim 3, **characterized in that** the head of the joint element (7) has at least two holes (11) having axes parallel to the longitudinal direction of the auxiliary beam (3) for engagement of screws (12) for fixing the joint element (7) to the main beam (2).

5. Joint device according to claim 4, **characterized in that** the main beam (2) has receptacle means (17) for receiving nuts (18) for engagement of said fixing screws (12).

6. Joint device according to claim 5, **characterized in that** the main beam (2) is constituted by a tubular element having at least one opened end within which a body (16) is inserted having a circumferencial wall with receptacles (17) for receiving the nuts (189 for the fixing screws (12), the wall of the main beam (2) having holes (19) for passage of said fixing screws (12).

7. Joint device according to claim 6, **characterized in that** the main beam (2) has a circular cross-section and a body (16) is a cylindrical tubular element of plastic material provided with at least two nut receiving receptacle (17) aligned along the longitudinal direction of the main beam (2) at one or more angular locations of the cylindrical body (16).

8. Joint device according to claim 7, **characterized in that** the head (8) of the joint element (7) has a front surface (9) for contact with the outer surface of the tubular element of circular cross-section constituting the main beam (2).

9. Joint device according to claim 8, **characterized in that** said joint element (7) is formed in a single piece of cast metal.
